# EUROPEAN PATENT APPLICATION

(11) **EP 4 510 528 A1**
(43) Date of publication of application: **19.02.2025**
(21) Application number: 23788269.1
(22) Date of filing: 07.04.2023
(51) Int. Cl.: H04L 47/2475

(54) **RAILWAY COMMUNICATION SYSTEM AND RAILWAY COMMUNICATION METHOD**

(30) Priority: 15.04.2022 JP 2022067866
(71) Applicant: Hitachi, Ltd., Tokyo 100-8280 (JP)
(72) Inventor: OKUMURA, Taichi, Tokyo 100-8280 (JP); OOMI, Taishi, Tokyo 100-8280 (JP); OKURA, Yoshinori, Tokyo 100-8280 (JP)
(74) Representative: MERH-IP Matias Erny Reichl Hoffmann Patentanwälte PartG mbB
(86) International application number: PCT/JP2023/014329
(87) International publication number: WO 2023/199850

(57) **Abstract**

Considering that an increase in the future is expected in applications related to communication and the amount of communication in railway ground-vehicle communication, in order to solve the problem of a high cost for providing a communication facility for each application, in a railway communication system for transmitting data of a plurality of applications between a ground facility and an on-vehicle facility using the same wireless network, an on-vehicle wireless control unit included in the on-vehicle facility has a function of monitoring a communication environment, a function of setting a transmission priority of each of the plurality of applications, and a function of performing packet control of the data based on the communication environment and the transmission priority.

## Description

### Technical Field

The present invention relates to a railway communication system and a railway communication method for controlling communication between a ground device and an on-vehicle device.

### Background Art

In the development of a high-speed and large-capacity communication environment, an increase in the future is expected in the amount of communication also in railway ground-vehicle communication thanks to the spread of 5G and the like. On the other hand, reduction is required from the viewpoint of cost for communication facilities.

For this reason, a technique for transmitting a large capacity of data at a smaller cost even in railway ground-vehicle communication is expected.

In addition, as a specific prior art document, PTL 1 discloses a technique in a railway facility monitoring system of, when wireless communication is not possible, excluding data having a low priority from the transmission targets as a data degradation process.

PTL 2 discloses a technique in a train radio system of, when a moving object is located in a section in a poor wireless environment, selecting data having a high priority and assigning high redundancy to the selected data having a high priority.

PTL 3 discloses a technique of categorizing information transmitted in a wireless or wired manner into a plurality of stages and transmitting the information at an information transmission timing according to each category.

### Citation List

### Patent Literature

PTL 1: JP2015-166217A
PTL 2: JP2014-123904A
PTL 3: JP2001-268026A

### Summary of Invention

### Technical Problem

In railway ground-vehicle communication of the relate art, a dedicated line is provided for each application, and communication is performed for each application. This requires a wireless communication facility for each application, leading to an increase in the number of facilities, maintenance cost, and the like.

An object of the present invention is to provide a technique for ensuring communication of an application having a high priority even when the communication environment is deteriorated, without increasing the size of the facility.

### Solution to Problem

In order to solve the problem described above, one of the representative railway communication systems according to the present invention is a railway communication system for transmitting data of a plurality of applications between a ground facility and an on-vehicle facility using the same wireless network, in which an on-vehicle wireless control unit included in the on-vehicle facility has a function of monitoring a communication environment, a function of setting a transmission priority of each of the plurality of applications, and a function of performing packet control of the data based on the communication environment and the transmission priority.

### Advantageous Effects of Invention

According to the present invention, it is possible to ensure communication of an application having a high priority even when the communication environment is deteriorated, while reducing the number of facilities of the line for each application.

### Brief Description of Drawings

[FIG. 1] FIG. 1 is a schematic diagram illustrating an example of a configuration of a railway communication system according to the present invention.
[FIG. 2] FIG. 2 is a diagram illustrating an example of a configuration and information flow in an on-vehicle wireless control unit according to Embodiment 1.
[FIG. 3] FIG. 3 is a diagram illustrating an environment in which personal terminals are interposed in the railway communication system according to the present invention.
[FIG. 4] FIG. 4 is a diagram illustrating an example of a configuration and information flow in an on-vehicle wireless control unit according to Embodiment 2.

### Description of Embodiments

Hereinafter, Embodiment 1 to Embodiment 3 according to the invention will be described with reference to the drawings. The invention is not limited to these Embodiments. In addition, in description of the drawings, the same parts are denoted by the same reference numerals.

### [Embodiment 1]

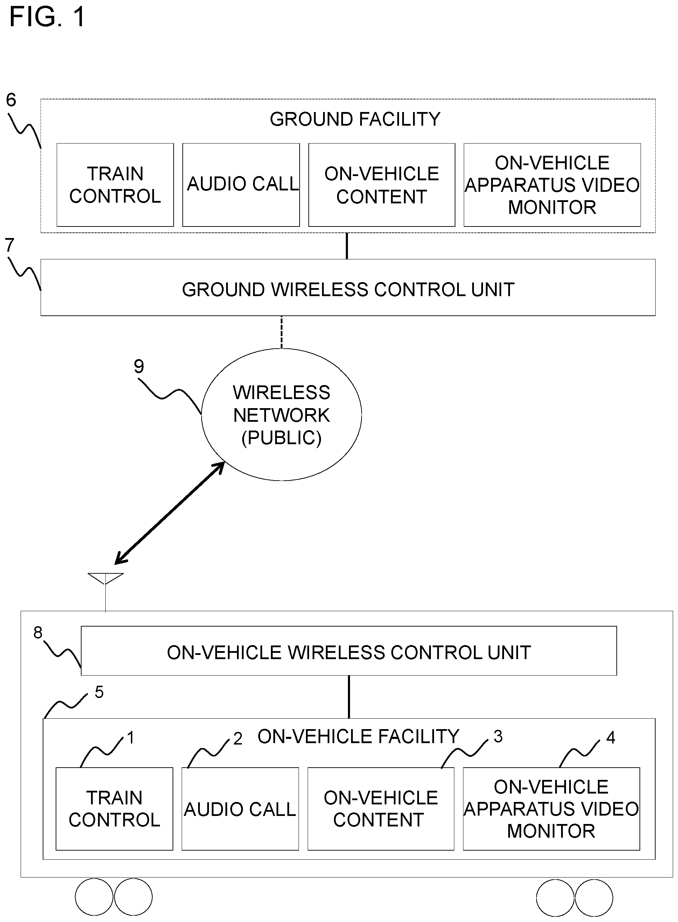

FIG. 1 is a schematic diagram illustrating an example of a configuration of a railway communication system according to the present invention. The railway communication system according to the present invention is a system for ground-vehicle transmission of a plurality of applications in the same wireless system.

In the example of the configuration illustrated in FIG. 1, four types of applications related to train control 1, audio call 2, on-vehicle content 3, and on-vehicle apparatus video monitor 4 are transmitted in the same wireless system. The four types of applications are provided in both a ground facility 5 and an on-vehicle facility 6.

Here, to show the outlines of the four types of applications, the train control 1 is a security application related to the operation control of the train (to be described later), the audio call 2 is an application related to audio calls such as a conversation between crewmembers or an in-vehicle announcement, the on-vehicle content 3 is an application related to a content for display on an in-vehicle display or the like, and the on-vehicle apparatus video monitor 4 is an application related to video monitoring or the like of the on-vehicle apparatus (to be described later).

Although four types of applications are exemplified, the present invention is not limited to the four types described above, and may use other applications. Moreover, the present invention is only required to target two or more types of applications without being limited to four types.

In FIG. 1, the ground facility 5 and the on-vehicle facility 6 constitute separate devices for each application, but may use a common device for a plurality of applications.

Data transmission from four types of applications is performed via a ground wireless control unit 7 and an on-vehicle wireless control unit 8. Here, the wireless control units are devices which are provided on the ground side and the on-vehicle side for receiving information transmitted from the plurality of applications in a wired manner and controlling wireless transmission packets.

The wireless system transmitting the transmission packets created by the wireless control units uses a public wireless network 9. Alternatively, an independent wireless network 9 may be used as a wireless system. Here, the independent wireless network is assumed to be provided in a region in which maintenance of communication facilities and the like is not established and the public wireless network is not stable. Alternatively, the public wireless network 9 and the independent wireless network 9 may be used in combination.

Next, an operation aspect according to Embodiment 1 will be described using the transmission system illustrated in FIG. 1.

In Embodiment 1, communication from the on-vehicle side to the ground side direction will be described. The communication from the ground side to the on-vehicle side performs the same operation as the communication from the on-vehicle side to the ground side direction.

First, the four types of applications illustrated in FIG. 1 are provided with transmission priorities (hereinafter simply referred to as "priorities"). The on-vehicle wireless control unit 8 receives a packet of data transmitted from each application (hereinafter referred to as an "application packet" or simplified "app packet") from the on-vehicle facility 6, and controls the packets based on the priority of each application (hereinafter referred to as "application priority") and the communication environment. For example, when the communication environment deteriorates, data from an application having a low application priority is excluded from the transmission targets to perform a process for stopping the transmission of the packet.

Next, an operation aspect of the on-vehicle wireless control unit 8 according to Embodiment 1 will be described.

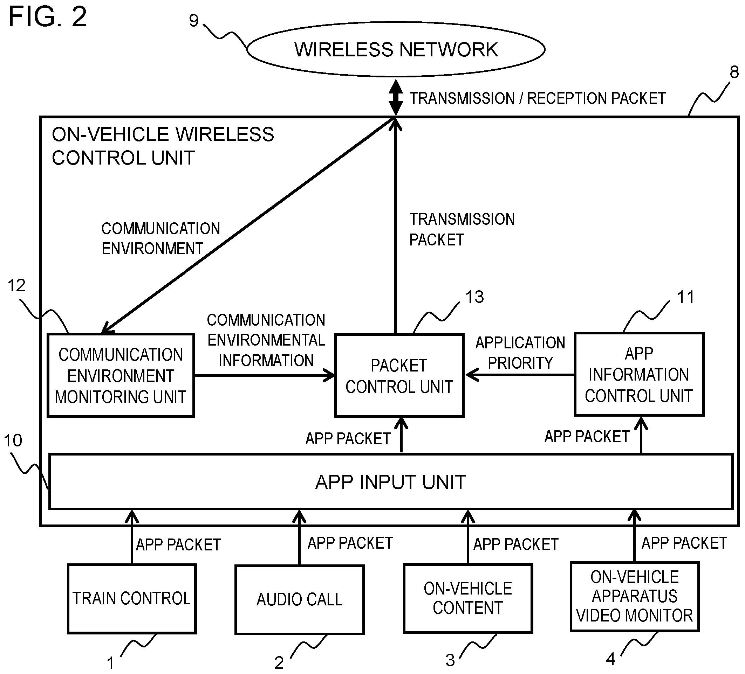

FIG. 2 is a diagram illustrating an example of a configuration and information flow in the on-vehicle wireless control unit 8 according to Embodiment 1. The on-vehicle wireless control unit 8 includes an app input unit 10, an app information control unit 11, a communication environment monitoring unit 12, and a packet control unit 13.

The app input unit 10 transmits to the app information control unit 11 and the packet control unit 13 an application packet (app packet) transmitted from each of four types of applications related to the train control 1, the audio call 2, the on-vehicle content 3, and the on-vehicle apparatus video monitor 4.

The app information control unit 11 refers to the inside of the received app packet. Therefore, for each application, the app information control unit 11 sets in advance one or more bits to be referred to in the app packet (hereinafter referred to as "reference bits").

The app information control unit 11 determines and outputs the application priority based on the value of the reference bits in the received app packet. The app information control unit 11 may set a condition for determining the application priority based on the value of the reference bits, or may conversely determine the application priority uniformly for each type of application without providing reference bits.

The communication environment monitoring unit 12 constantly monitors the communication environment of the wireless network 9 and outputs information related to the communication environment (hereinafter referred to as "communication environmental information"). Here, the round-trip time (RTT), the packet loss rate, the received radio wave intensity, and the like are exemplified as specific examples of the communication environment monitored by the communication environment monitoring unit 12.

The packet control unit 13 controls the transmission of the app packet and outputs the transmission packet based on the application priority output by the app information control unit 11 and the communication environmental information output from the communication environment monitoring unit 12. In Embodiment 1, the packet control unit 13 determines whether the app packet can be transmitted based on the application priority and the communication environmental information, and only outputs an app packet having a high application priority as a transmission packet receiving a situation in which the communication environment is deteriorated from the communication environmental information.

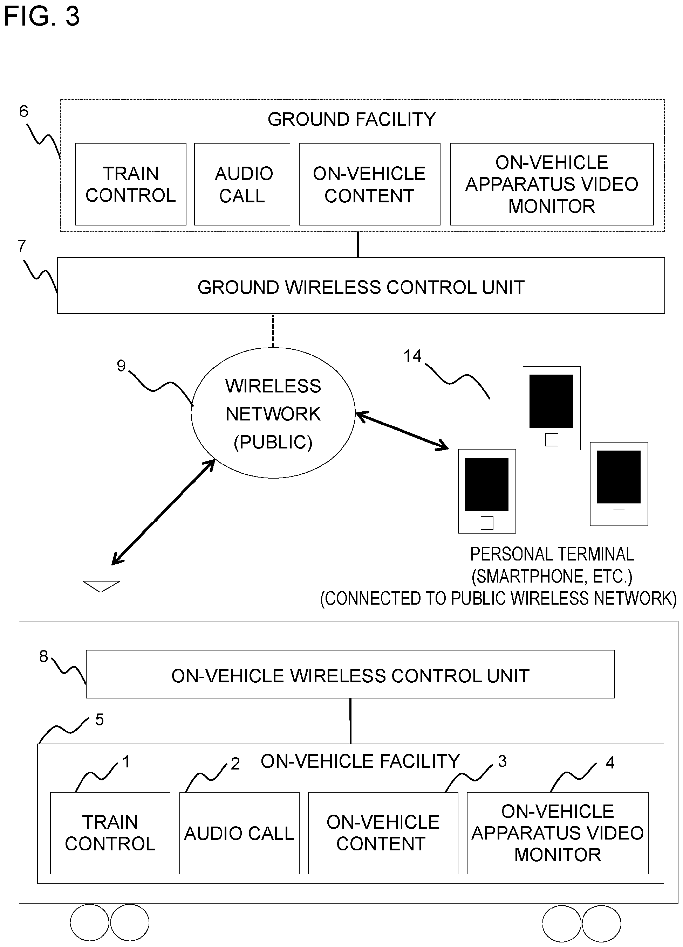

Here, as a specific example in which the communication environment is deteriorated, the communication is stuck due to generally used personal terminals (smartphones and the like). FIG. 3 is a diagram illustrating an environment in which personal terminals (smartphones, etc.) are interposed in the railway communication system according to the present invention. In the railway communication system according to the present invention, since a public wireless network is used as the wireless system, generally used personal terminals (smartphones and the like) 14 are also connected to the same public wireless network to use the line as illustrated in FIG. 3. Therefore, the communication environment is likely to deteriorate due to the line being stuck due to the interposed personal terminals. Since the communication environment is considered as constantly changing when the train travels, it is important to monitor the communication environment in the railway communication system.

Next, the setting procedure will be described for the priority setting for each application of the app information control unit 11, with a specific application as an example.

Examples of the application include the on-vehicle apparatus video monitor 4 and the train control 1.

First, an application related to the on-vehicle apparatus video monitor 4 is an application for monitoring, by video, an on-vehicle apparatus such as a carriage or an electric motor, determining the monitoring video, and transmitting normal or abnormal of the on-vehicle apparatus.

For this application, the app information control unit 11 included in the on-vehicle wireless control unit 8 sets, as reference bits, bits indicating whether the on-vehicle apparatus is normal or abnormal in the application related to the on-vehicle apparatus video monitor 4. That is, it is possible to set the reference bits while reflecting normal or abnormal of the on-vehicle apparatus in real time depending on the application related to the on-vehicle apparatus video monitor 4.

At a normal time of the on-vehicle apparatus when the reference bits indicate normal, the priority is set to "low" in consideration of the capacity of the video data. On the other hand, at an abnormal time of the on-vehicle apparatus when the reference bits indicate abnormal, the priority is set to "high". That is, it is possible to set the application priority while reflecting normal or abnormal of the on-vehicle apparatus to the reference bits in real time depending on the application related to the on-vehicle apparatus video monitor 4.

The other application related to the train control 1 is a security application for performing operation control of the train, represented by communications-based train control (CBTC). Since this application is for security, the priority thereof is set to "high" normally regardless of the status of the application. Therefore, for the app packet from this train control 1, the app information control unit 11 sets the priority to "high" normally.

As described above, Embodiment 1 can ensure ground-vehicle transmission in the two above-described applications even when the communication environment is deteriorated.

### [Embodiment 2]

The setting of the priority is performed based on the reference bits in the application in Embodiment 1, but may change depending on the train position and the operation section of the vehicle. In Embodiment 2 of the present invention, the priority is set based on the train position and the operation section of the vehicle.

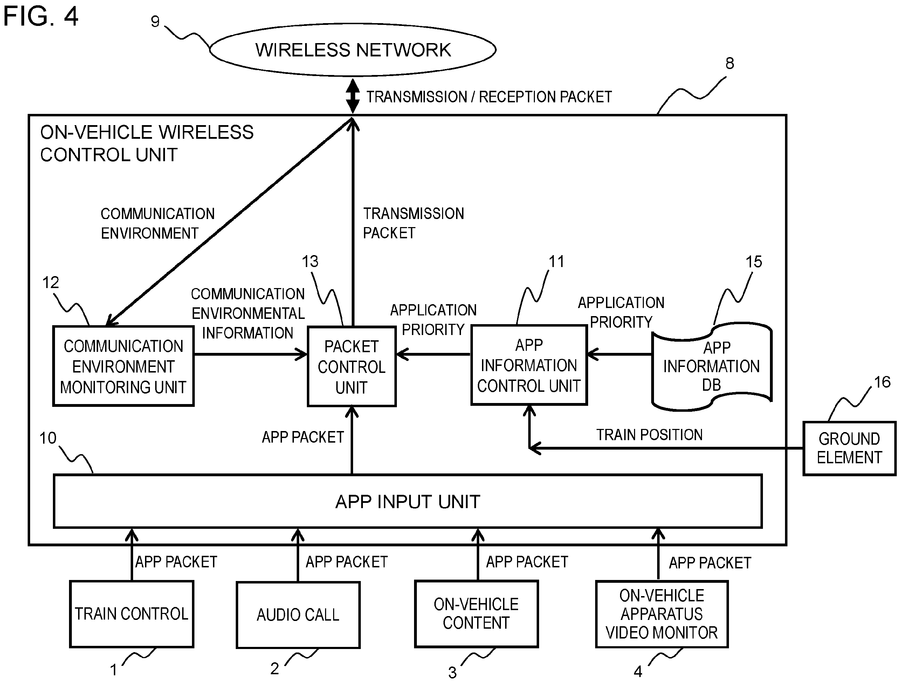

FIG. 4 is a diagram illustrating an example of a configuration and information flow in the on-vehicle wireless control unit 8 according to Embodiment 2. Compared to Embodiment 1, Embodiment 2 has an app information database (DB) added to the on-vehicle wireless control unit 8, and acquires train position information from a ground element 16.

The app information DB 15 stores information on the priority of each application set in advance corresponding to the train position. In addition, the information on the priority of each application may be set and stored in the app information DB 15 in a form corresponding to the operation section of the vehicle.

The app information control unit 11 receives the application priority information from the app information DB 15 and the train position information from the ground element 16, and determines the priority of the application based on the content of the app information DB 15 and the actual train position.

On the other hand, if the train position information exists in the app packet subjected to ground-vehicle transmission, the train position may be referred to from the train position information instead of from the ground element 16. Alternatively, the train position information in the app packet and the train position information from the ground element 16 may be used in combination.

As a result, Embodiment 2 can ensure ground-vehicle transmission of the app packet while not only handling with the deterioration of the communication environment but also handling with the regional characteristics of the train operation using the train position and the operation section of the vehicle.

### [Embodiment 3]

When the communication environment is deteriorated, Embodiment 3 of the present invention does not exclude an application having a low priority from the transmission targets as in Embodiment 1 and Embodiment 2, but changes the transmission interval (transmission cycle) in the application having a low priority. Specifically, the packet control unit 13 illustrated in FIG. 2 controls the transmission interval (transmission cycle) of the application.

That is, when the communication quality as the communication environment is lower than a predetermined quality, the packet control unit 13 widens (increases) the transmission cycle of the application having a low priority to output the transmission packet sparsely. Alternatively, the interval of the transmission cycle may be changed depending on the priority, and the transmission cycle may be controlled to be wider (larger) as the priority is lower.

As a result, Embodiment 3 can ensure the ground-vehicle transmission of app packets having a high priority even when the communication environment is deteriorated.

The embodiments of the invention have been described above, but the invention is not limited to the embodiments described above, and various changes can be made in a range not departing from a gist of the invention.

### Reference Signs List

- 1:: train control (app name)
- 2:: audio call (app name)
- 3:: on-vehicle content (app name)
- 4:: on-vehicle apparatus video monitor (app name)
- 5:: ground facility
- 6:: on-vehicle facility
- 7:: ground wireless control unit
- 8:: on-vehicle wireless control unit
- 9:: wireless network (public)
- 10:: app input unit
- 11:: app information control unit
- 12:: communication environment monitoring unit
- 13:: packet control unit
- 14:: personal terminal (smartphone, etc.)
- 15:: app information DB
- 16:: ground element

## Claims

1. A railway communication system for transmitting data of a plurality of applications between a ground facility and an on-vehicle facility using the same wireless network, wherein
an on-vehicle wireless control unit included in the on-vehicle facility has
a function of monitoring a communication environment,
a function of setting a transmission priority of each of the plurality of applications, and
a function of performing packet control of the data based on the communication environment and the transmission priority.

2. The railway communication system according to claim 1, wherein
the wireless network is a public wireless network.

3. The railway communication system according to claim 1, wherein
the function of setting a transmission priority for each of the plurality of applications is a function of setting a transmission priority for each of the applications in real time in accordance with a status generated inside the application.

4. The railway communication system according to claim 1, wherein
the function of setting a transmission priority for each of the plurality of applications is a function of setting a transmission priority for each of the applications in accordance with a traveling position of a vehicle equipped with the on-vehicle facility.

5. The railway communication system according to claim 1, wherein
the function of setting a transmission priority for each of the plurality of applications is a function of setting a transmission priority for each of the applications in accordance with an operation section in which a vehicle equipped with the on-vehicle facility travels.

6. The railway communication system according to any one of claims 1 to 5, wherein
the function of performing packet control of the data based on the communication environment and the transmission priority is a function of stopping transmission of data having a low transmission priority when the communication environment is deteriorated.

7. The railway communication system according to any one of claims 1 to 5, wherein
the function of performing packet control of the data based on the communication environment and the transmission priority is a function of increasing a transmission cycle of data having a low transmission priority when the communication environment is deteriorated.

8. The railway communication system according to any one of claims 1 to 5, wherein
the plurality of applications include at least one of:
an application configured to monitor, by video, whether an on-vehicle apparatus of a vehicle equipped with the on-vehicle facility is normal; and
a security application configured to perform operation control of a train including a vehicle equipped with the on-vehicle facility.

9. A railway communication method for transmitting data of a plurality of applications between a ground facility and an on-vehicle facility using the same wireless network, the railway communication method comprising:
on the on-vehicle facility side, monitoring a communication environment, setting a transmission priority for each of the plurality of applications, and performing packet control of the data based on the communication environment and the transmission priority.

10. The railway communication method according to claim 9, wherein
the transmission priority of each of the plurality of applications is set in real time in accordance with a status generated inside the application.

11. The railway communication method according to claim 9, wherein
the transmission priority of each of the plurality of applications is set in accordance with a traveling position of a vehicle equipped with the on-vehicle facility.

12. The railway communication method according to claim 9, wherein
the transmission priority of each of the plurality of applications is set in accordance with an operation section in which a vehicle equipped with the on-vehicle facility travels.

13. The railway communication method according to claim 9, wherein
the packet control of the data is stopping transmission of data having a low transmission priority when the communication environment is deteriorated.

14. The railway communication method according to claim 9, wherein
the packet control of the data is increasing a transmission cycle of data having a low transmission priority when the communication environment is deteriorated.
